(19) Europäisches Patentamt / European Patent Office / Office européen des brevets

(11) **EP 3 263 647 A1**

(12) **EUROPEAN PATENT APPLICATION**
published in accordance with Art. 153(4) EPC

(43) Date of publication:
**03.01.2018 Bulletin 2018/01**

(21) Application number: **15883342.6**

(22) Date of filing: **19.11.2015**

(51) Int Cl.:
***C08L 81/06*** (2006.01)    ***C08J 5/04*** (2006.01)
***C08L 63/00*** (2006.01)

(86) International application number:
**PCT/JP2015/082515**

(87) International publication number:
**WO 2016/136052 (01.09.2016 Gazette 2016/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.02.2015 JP 2015038135**

(71) Applicant: **Toray Industries, Inc.**
**Tokyo 103-8666 (JP)**

(72) Inventors:
• **NAGANO, Maki**
  **Nagoya-shi**
  **Aichi 455-8502 (JP)**
• **TOMIOKA, Nobuyuki**
  **Nagoya-shi**
  **Aichi 455-8502 (JP)**

(74) Representative: **Webster, Jeremy Mark et al**
**Mewburn Ellis LLP**
**City Tower**
**40 Basinghall Street**
**London EC2V 5DE (GB)**

(54) **EPOXY RESIN COMPOSITION, CURED EPOXY RESIN PRODUCT, PREPREG, AND FIBER-REINFORCED COMPOSITE MATERIAL**

(57)    Provided are: an epoxy resin composition having exceptional performance with regard to impregnating reinforcing fibers, enabling optimal control of resin flow during molding, and having exceptional in-plane shear strength; a cured epoxy resin product; and a prepreg. An epoxy resin composition comprising at least the following constituent elements [A], [B], and [C]: [A] an epoxy resin, [B] a polyether sulfone having a weight-average molecular weight of 2000-20000 g/mol, [C] a curing agent

**EP 3 263 647 A1**

**Description**

Technical Field

The present invention relates to fiber reinforced composite material suitable for aerospace applications, and also relates to prepreg for the production thereof and an epoxy resin composition suitable for use as matrix resin thereof.

Background Art

High in specific strength and specific modulus, fiber reinforced composite materials containing reinforcement fiber such as carbon fiber and aramid fiber have recently been used widely for manufacturing structural materials for aircraft, automobiles, etc., and sporting goods such as tennis rackets, golf shafts, and fishing rods, as well as general industrial applications.

Such fiber reinforced composite materials can be manufactured by, for example, preparing prepreg, which is a sheet-like intermediate material composed of reinforcement fiber impregnated with uncured matrix resin, stacking a plurality of such sheets, and curing them by heating; or placing reinforcement fiber in a mold, injecting liquid resin into it to prepare an intermediate material, and curing it by heating, which is called the resin transfer molding method. Of these production methods, the use of prepreg has the advantage of enabling easy production of high performance fiber reinforced composite material because the orientation of the reinforcement fiber can be controlled accurately and also because a high degree of design freedom is ensured for the stack structure. As the matrix resin of such prepreg, thermosetting resins are mainly used from the viewpoint of productivity-related properties such as heat resistance and processability, and in particular, epoxy resin compositions are preferred from the viewpoint of mechanical characteristics such as adhesion between resin and reinforcement fiber, their dimensional stability, and the strength and rigidity of composite materials produced from them.

Among others, polyfunctional aromatic epoxy resins, which can form cured resin materials with a small epoxy equivalent and a high crosslink density, have been adopted favorably as matrix resin for reinforcement fiber of fiber reinforced composite materials used for producing fiber reinforced composite materials needed in the field of aerospace applications where materials with increased lightweightness, improved material strength, and durable stability are now required in order to meet demands that are increasing in recent years. Although they accordingly have enabled resin design with high elastic modulus and high heat resistance, cured resins produced from them tend to be low in deformability and ductility. There have been some attempts to solve this problem, such as adding a rubber component or thermoplastic resin, which are inherently high in toughness, to form a phase separation structure with epoxy resin. In this method, however, the resin tend to undergo a large increase in viscosity, which can lead to deterioration in processability and insufficient impregnation of reinforcement fiber.

Meanwhile, a study has disclosed a method that adopts thermoplastic resin with a medium degree of molecular weight to form prepreg with high tackiness and drape properties (see Patent document 1). Another study has proposed a technique that uses a large quantity of low molecular weight thermoplastic resin to develop high ductility in spite of low viscosity (see Patent document 2). Specifically, a process has been disclosed that uses a large quantity of polysulfone oligomers for amine terminals to realize high ductility while maintaining low viscosity. Patent document 3, furthermore, proposes that not only the solvent resistance is improved, but also the prepreg processability can be enhanced by adding polyethersulfone having a weight-average molecular weight of 21,000.

Prior Art Documents

Patent Documents

Patent document 1: Japanese Unexamined Patent Publication No. 2009-167333
Patent document 2: Japanese Unexamined Patent Publication No. SHO-61-228016
Patent document 3: International Publication WO2012/051045

Summary of the Invention

Problems to be Solved by the Invention

However, the method proposed in Patent document 1 cannot develop toughness because it is not designed for using thermoplastic resin with a largely decreased molecular weight and has difficulty in adding a large amount of thermoplastic resin.

The method proposed in Patent document 2 has problems such as a decrease in heat resistance and excessive flows of resin during molding, leading to unevenness in fiber's volume content and orientation in moldings and significant variations in mechanical characteristics.

The method proposed in Patent document 3 cannot realize a sufficiently high processability to provide fiber reinforced composite material having interlayer toughness.

Thus, currently no resin compositions are available that can develop high ductility while ensuring sufficiently high heat resistance and processability, and no fiber reinforced composite materials are available that have various good characteristics to suite lightweight applications as described above. In particular, in developing fiber reinforced composite materials that contain carbon fiber with high elastic modulus contributing to weight reduction and have large fiber contents, there has been a strong demand for a technique that serves to increase the in-plane shear strength.

Thus, an object of the present invention is to provide an epoxy resin composition that can efficiently impregnate reinforcement fiber, enables an appropriate resin flow during molding, and serves to produce fiber reinforced composite material with high in-plane shear strength, and to provide cured epoxy resin material and prepreg.

Means of Solving the Problems

The present invention adopts one or more of the following constitutions to meet the above object. Specifically, the present invention has the constitution described below.

An epoxy resin composition including at least constituents [A], [B], and [C].

[A] epoxy resin
[B] polyethersulfone with a weight-average molecular weight of 2,000 to 20,000 g/mol
[C] curing agent

The present invention, furthermore, can provide prepreg composed of reinforcement fiber impregnated with the aforementioned epoxy resin composition and also provide fiber reinforced composite material composed of a cured product of the epoxy resin composition and reinforcement fiber.

Advantageous Effect of the Invention

The present invention relates to an epoxy resin composition having a specific range of dynamic viscoelasticity, which is so low in viscosity as to realize efficient impregnation of reinforcement fiber and easy control of the resin flow during molding. Thus, the invention provides fiber reinforced composite material as well as an epoxy resin composition, cured epoxy resin, and prepreg that serve for the production thereof. In addition, the use of such an epoxy resin composition serves to provide fiber reinforced composite material having high in-plane shear strength.

Description of Preferred Embodiments

The epoxy resin composition according to the present invention includes at least components [A], [B], and [C] specified below.

[A] epoxy resin
[B] polyethersulfone with a weight-average molecular weight of 2,000 to 20,000 g/mol
[C] curing agent

The constituent [A] (hereinafter the term "component" may be used instead of "constituent") used for the present invention is an epoxy resin, which represents the main features of the mechanical properties and handleability of a cured epoxy resin produced therefrom. Such epoxy resin used for the present invention is a compound having one or more epoxy groups in one molecule.

Specific examples of the epoxy resin used for the present invention include aromatic glycidyl ethers produced from a phenol having a plurality of hydroxyl groups, aliphatic glycidyl ethers produced from an alcohol having a plurality of hydroxyl groups, glycidyl amines produced from an amine, glycidyl esters produced from a carboxylic acid having a plurality of carboxyl groups, and epoxy resins having an oxirane ring.

In particular, glycidyl amine type epoxy resins are preferred because they are low in viscosity and able to impregnate reinforcement fiber easily and accordingly can serve to produce fiber reinforced composite materials having good mechanical characteristics including heat resistance and elastic modulus. Such glycidyl amine type epoxy resins can be roughly divided into two groups: polyfunctional amine type epoxy resins and bifunctional amine type epoxy resins.

A polyfunctional amine type epoxy resin is a glycidyl amine type epoxy resin containing three or more epoxy groups in one epoxy resin molecule. Examples include, for instance, tetraglycidyl diaminodiphenyl methane, triglycidyl aminophenol, and tetraglycidyl xylylene diamine, as well as halogen-substituted compounds, alkyl-substituted compounds, aralkyl-substituted compounds, allyl-substituted compounds, alkoxy-substituted compounds, aralkoxy-substituted compounds, allyloxy-substituted compounds, and hydrogenated compounds thereof.

There are no specific limitations on the polyfunctional amine type epoxy resin to be adopted, but preferred ones include tetraglycidyl diaminodiphenyl methane, triglycidyl aminophenol, tetraglycidyl xylylene diamine, and substituted or hydrogenated compounds thereof.

Available products of tetraglycidyl diaminodiphenyl methane as described above include SUMI-EPOXY (registered trademark) ELM434 (manufactured by Sumitomo Chemical Co., Ltd.), YH434L (manufactured by Nippon Steel & Sumikin Chemical Co., Ltd.), jER (registered trademark) 604 (manufactured by Mitsubishi Chemical Corporation), and Araldite (registered trademark) MY720 or MY721 (manufactured by Huntsman Advanced Materials). Available products of triglycidyl aminophenol and alkyl-substituted compounds thereof include SUMI-EPOXY (registered trademark) ELM100 and ELM120 (manufactured by Sumitomo Chemical Co., Ltd.), Araldite (registered trademark) MY0500, MY0510, and MY0600 (manufactured by Huntsman Advanced Materials), and jER (registered trademark) 630 (manufactured by Mitsubishi Chemical Corporation). Available products of tetraglycidyl xylylene diamine and hydrogenated compounds thereof include TETRAD (registered trademark) -X and TETRAD (registered trademark) -C (manufactured by Mitsubishi Gas Chemical Co., Inc.).

Polyfunctional amine type epoxy resins are used preferably as epoxy resin to be adopted for the present invention because they can provide cured epoxy resins with heat resistance and mechanical characteristics, such as elastic modulus, in a good balance with the former. According to a more preferred embodiment, the polyfunctional amine type epoxy resin accounts for 30 to 80 mass% relative to the total epoxy resin quantity (100 mass%) in the epoxy resin composition.

A bifunctional amine type epoxy resin is a glycidyl amine type epoxy resin containing two epoxy groups in one molecule. Examples include, for instance, diglycidyl aniline, as well as halogen-substituted compounds, alkyl-substituted compounds, aralkyl-substituted compounds, allyl-substituted compounds, alkoxy-substituted compounds, aralkoxy-substituted compounds, allyloxy-substituted compounds, and hydrogenated compounds thereof.

There are no specific limitations on the bifunctional amine type epoxy resin to be adopted, but preferred ones include diglycidyl aniline, diglycidyl toluidine, and halogen-substituted-, alkyl-substituted-, or hydrogenated-compounds thereof.

Available products of diglycidyl aniline as described above include GAN (manufactured by Nippon Kayaku Co., Ltd.) and PxGAN (manufactured by Toray Fine Chemicals Co., Ltd.). Available products of diglycidyl toluidine include GOT (manufactured by Nippon Kayaku Co., Ltd.).

Bifunctional amine type epoxy resins are preferred for use as epoxy resin for the present invention because they serve effectively to produce fiber reinforced composite materials having high strength and ensures efficient impregnation of reinforcement fiber even when they are low in viscosity. According to a more preferred embodiment, the bifunctional amine type epoxy resin used accounts for 10 to 60 mass% relative to the total epoxy resin quantity (100 mass%) in the epoxy resin composition. From the viewpoint of the balance between the adhesion to reinforcement fiber and mechanical properties, it is preferably used in combination with a polyfunctional amine type epoxy resin, and it is preferable that the polyfunctional amine type epoxy resin accounts for 40 to 70 parts by mass and the bifunctional amine type epoxy resin accounts for 20 to 50 parts by mass relative to the total quantity of the epoxy resin composition.

The constituent [B] (occasionally also referred to as component [B]) for the present invention is polyethersulfone with a weight-average molecular weight of 2,000 to 20,000 g/mol, which ensures the production of a cured epoxy resin, produced by curing the epoxy resin composition according to the present invention, that shows a high yield stress without suffering from a significant decrease in the nominal strain at compression fracture and also ensures that fiber reinforced composite material produced from the epoxy resin composition according to the present invention has a sufficiently high in-plane shear strength. Furthermore, component [B] is very high in compatibility with epoxy resins, and the entanglement of polyethersulfone molecular chains has good effect in the epoxy resin composition, leading to the development of a mechanism that realizes high dynamic viscoelasticity as described later.

Such polyethersulfone has both the ether bond and the sulfone bond in its backbone chain to form a skeleton that is essential to realize high heat resistance, elastic modulus, and toughness. When the backbone chain is in the form of a polyethersulfone skeleton having a side chain, it is preferable that the side chain also has a highly heat resistant structure, although the backbone may not have a side chain.

Such a component [B] preferably has a weight-average molecular weight in the range of 2,000 to 20,000 g/mol, more preferably 4,000 to 15,000 g/mol, and still more preferably 4,000 to 10,000 g/mol. If the weight-average molecular weight is less than 2,000 g/mol, cured epoxy resin produced by curing the epoxy resin composition may fail to have a sufficiently high nominal strain at compression fracture, and fiber reinforced composite material produced from the epoxy resin composition may fail to develop a sufficiently high in-plane shear strength. Furthermore, the storage elastic modulus G' will not be increased sufficiently as compared with the increase in the complex viscosity η*, sometimes making it impossible to control the resin flow rate appropriately during molding. If the weight-average molecular weight is more than 20,000 g/mol, on the other hand, the epoxy resin will be too high in viscosity and difficult to knead when thermoplastic resin is dissolved in the epoxy resin composition, possibly leading to difficulty in prepreg production. Here, the weight-average molecular weight of component [B] is equivalent to the relative molecular weight determined by GPC (gel permeation chromatography) using a polystyrene standard sample.

Furthermore, it is preferable for the hydroxyphenyl group to account for 60 mol% or more of the terminal groups of the polyethersulfone of such a component [B]. This functional group reacts with an epoxy resin or an epoxy resin curing agent to realize an increase in the affinity with the epoxy resin based phase and develop uniform compatibility, or if failing to develop uniform compatibility, strong interfacial adhesion between the epoxy resin phase and the polyethersulfone phase of component [B], leading to an epoxy resin composition having a high nominal strain at compression fracture that ensures a high yield stress. From this viewpoint, the proportion of the hydroxyphenyl group in the terminal groups of the polyethersulfone of component [B] is preferably as high as possible, and the hydroxyphenyl group most preferably accounts for 100% of the terminal groups. If the hydroxyphenyl group accounts for only less than 60 mol% of the terminal groups (which hereinafter means that the proportion of the hydroxyphenyl group in the terminal groups of polyethersulfone is less than 60 mol%), the compatibility, and hence the nominal strain at compression fracture, may not be sufficiently high depending on the type of the epoxy resin and the curing temperature of the matrix resin. To determine the proportion of the hydroxyphenyl group in the terminal groups, observation in, for example, a deuterated DMSO solvent is performed by $^1$H-NMR at 400 MHz with the number of times of integration set to 100. Then, the proton ([1]HCl) adjacent to the chlorine-substituted aromatic carbon and the proton ([1]HOH) adjacent to the hydroxyl-substituted aromatic carbon are identified with high resolution at 7.7 ppm and 6.9 ppm, respectively, and the area ratio of $^1$H-NMR represents the number of moles. Accordingly, the terminal functional group composition (mol%) can be calculated by the following equation.

$$[\text{Terminal hydroxyl group composition (mol\%)}] = [^{1}\text{HOH peak area}] / ([^{1}\text{HOH peak area}] + [^{1}\text{HCl peak area}]) \times 100$$

In the polyethersulfone of component [B] for the present invention, it is preferable for the hydroxyphenyl group to account for 60 mol% or more of the terminal groups to realize the advantageous effect of the invention, but there are no specific limitations on the method to be adopted to produce such polyethersulfone in which the hydroxyphenyl group accounts for 60 mol% or more of the terminal groups, and useful production methods are found in, for example, Japanese Examined Patent Publication No. SHO-42-7799, Japanese Examined Patent Publication No. SHO-45-21318, and Japanese Unexamined Patent Publication No. SHO-48-19700. According to these documents, it can be produced through condensation polymerization of a divalent phenol compound such as 4,4'-dihydroxydiphenyl sulfone and a divalent dihalogenodiphenyl compound such as 4,4'-dichlorodiphenyl sulfone performed in the presence of an alkali metal compound such as sodium hydroxide, potassium hydroxide, sodium carbonate, and potassium carbonate in an aprotic polar solvent such as N-methyl pyrolidone, DMF, DMSO, and sulfolane. Actually, a polyethersulfone polymer useful as component [B] intended here can be obtained if good conditions are developed carefully. Depending on the polymerization conditions, however, the proportion of terminal hydroxyphenyl groups may be small in the resulting polyethersulfone product and attempts to increase the proportion of terminal hydroxyphenyl groups will possibly results in a significant decrease in polymer molecular weight or difficulty in collecting the intended polyethersulfone product for component [B] from the reaction solution.

Thus, a preferred method for the production of a polyethersulfone polymer to be used as component [B] for the present invention is first carrying out condensation polymerization of a divalent phenol compound and a dihalogenodiphenyl compound by a generally known method to prepare high molecular weight polyethersulfone and then heating the resulting high molecular weight polyethersulfone with a divalent phenol compound in an aprotic polar solvent to introduce hydroxyphenyl groups at molecular ends.

Component [B] for the present invention preferably has a glass transition temperature of 180°C or more and 230°C or less. If it is less than 180°C, the product may have a decreased heat resistance depending on the heat resistance of the epoxy resin, whereas if it is more than 230°C, the matrix resin will have such a high glass transition temperature that the resulting fiber reinforced composite material will have a large residual heat stress, possibly leading to a fiber reinforced composite material with deteriorated mechanical properties.

For the present invention, component [B] preferably accounts for 20 to 60 mass%, more preferably 30 to 55 mass%, and still more preferably 40 to 50 mass%, of the total quantity epoxy resin (100 mass%) in the epoxy resin composition. If it is less than 20 mass%, it will lead to cured epoxy resin having a decreased nominal strain at compression fracture, resulting in fiber reinforced composite material having insufficient in-plane shear strength. If it is more than 60 mass%, on the other hand, the epoxy resin composition will suffer from an increase in viscosity and accordingly, the epoxy resin composition and prepreg produced therefrom will fail to have sufficiently high processability and handleability.

The epoxy resin composition according to the present invention contains a curing agent [C].

There are no specific limitations on the curing agent to be adopted as long as it is a compound having an active group that reacts with the epoxy group, and examples thereof include, for example, dicyandiamide, aromatic polyamine, aminobenzoic acid esters, various acid anhydrides, phenol novolac resin, cresol novolac resin, polyphenol compounds, imidazole derivatives, aliphatic amines, tetramethyl guanidine, thiourea-added amine, methylhexahydrophthalic acid anhydride, other carboxylic anhydrides, carboxylic acid hydrazide, carboxylic acid amide, polymercaptan, boron trifluoride - ethylamine complex, and other Lewis acid complexes.

In particular, the use of aromatic polyamine as the curing agent makes it possible to produce cured epoxy resin having high heat resistance. Among others, diaminodiphenyl sulfone, derivatives thereof, and various isomers thereof are the most suitable curing agents to produce cured epoxy resin having high heat resistance.

Furthermore, if a combination of dicyandiamide and a urea compound such as 3,4-dichlorophenyl-1,1-dimethylurea, or an imidazole is used as the curing agent, high heat resistance and water resistance can be achieved even when curing is performed at a relatively low temperature. The use of an acid anhydride to cure epoxy resin can serve to provide cured material that has a lower water absorption percentage as compared with curing with an amine compound. Other good curing agents include the above ones in latent forms such as microencapsulated ones, which serve to provide prepreg with high storage stability that will not suffer significant changes particularly in tackiness and drape properties even when left to stand at room temperature.

The optimum content of a curing agent depends on the type of the epoxy resin and curing agent used. When an aromatic amine based curing agent is used, its blending quantity is preferably such that the number of active hydrogen atoms is 0.6 to 1.2 times, preferably 0.7 to 1.1 times, that of epoxy groups in the epoxy resin, from the viewpoint of heat resistance and mechanical characteristics. If it is less than 0.6 times, the resulting cured product will fail to have a sufficiently high crosslink density, possibly leading to a lack of elastic modulus and heat resistance and resulting in fiber reinforced composite material with poor static strength characteristics. If it is more than 1.2 times, the resulting cured material will have an excessively high crosslink density and water absorption, which lead to a lack of deformation capacity, and the resulting fiber composite material will possibly be poor in impact resistance.

Commercial products of such aromatic polyamine curing agents include SEIKACURE-S (manufactured by Wakayama Seika Kogyo Co., Ltd.), MDA-220 (manufactured by Mitsui Chemicals, Inc.), jER Cure (registered trademark) W (manufactured by Mitsubishi Chemical Corporation), 3,3'-DAS (manufactured by Mitsui Chemicals, Inc.), Lonzacure (registered trademark) M-DEA (manufactured by Lonza), Lonzacure (registered trademark) M-DIPA (manufactured by Lonza), Lonzacure (registered trademark) M-MIPA (manufactured by Lonza), and Lonzacure (registered trademark) DETDA 80 (manufactured by Lonza).

The composition may contain these epoxy resins and curing agents, part of which may be subjected to a preliminary reaction in advance. In some cases, this method can serve effectively for viscosity adjustment and storage stability improvement.

For the epoxy resin composition according to the present invention, the storage elastic modulus G' and complex viscosity $\eta^*$ at 80°C preferably meets the relation $0.20 \leqq G'/\eta^* \leqq 2.0$. More specifically, if the value of G'/ $\eta^*$, which is calculated as the ratio between the storage elastic modulus G' at 80°C of the epoxy resin composition and the complex viscosity $\eta^*$ at 80°C of the epoxy resin composition, is in the range of 0.20 or more and 2.0 or less, it will be possible to obtain an epoxy resin composition that is relatively high in rubber elastic modulus though being low in viscosity.

For the present invention, the storage elastic modulus G' and the complex viscosity $\eta^*$ can be determined by, for example, using a dynamic viscoelasticity measuring apparatus such as ARES (manufactured by TA Instrument) under the measuring conditions of a heating rate of 1.5°C/min, a frequency of 1 Hz, and a strain of 0.1%.

For the epoxy resin composition according to the present invention, the storage elastic modulus G' and complex viscosity $\eta^*$ at 80°C preferably meets the relation $0.20 \leqq G'/\eta^* \leqq 2.0$, more preferably $0.25 \leqq G'/\eta^* \leqq 1.0$, and still more preferably $0.3 \leqq G'/\eta^* \leqq 0.5$.

If the epoxy resin composition has a ratio of G'/$\eta^*$ at 80°C of 0.20 or more, the resin flow rate during molding can be controlled appropriately, and accordingly the variation in resin content can be maintained small, leading to fiber reinforced composite material having good mechanical characteristics. In particular, a lack of resin can be avoided during molding of fiber reinforced composite material process to enable the production of cured epoxy resin having a sufficiently large nominal strain at compression fracture, leading to fiber reinforced composite material having adequate in-plane shear strength. If the ratio of G'/$\eta^*$ at 80°C of the epoxy resin composition is 2.0 or less, on the other hand, its viscosity will be maintained at an appropriate level during impregnation when molding fiber reinforced composite material, ensuring efficient impregnation of reinforcement fiber.

The cured epoxy resin according to the present invention preferably has a glass transition temperature of 120°C to 250°C, more preferably 140°C to 210°C, from the viewpoint of maintaining a sufficiently high level of heat resistance and moist heat compression strength required in aircraft material. A relatively high curing temperature is required when prepreg is produced by curing an epoxy resin composition having such a relatively high heat resistance. Currently, prepreg plates used to produce material for airframe structures of aircraft generally require curing and molding temperatures in the range of $180\pm10°C$. When fiber reinforced composite material having sufficiently high strength is to be produced by curing and molding prepreg layers, such a prepreg laminate is generally cured and molded under an increased pressure larger than 1 atm.

The cured epoxy resin according to the present invention preferably forms a uniform phase without phase separation among components [A], [B], and [C] or forms a structure containing 400nm or less finely separated phases each formed mainly of resin of component [A] or [B]. Here, a "uniform phase" means a state in which crosslinked, cured products of components [A], [B], and [C] are uniformly mixed at the molecular level in a mutually compatible state. Here, it is preferable for such a polyethersulfone component [B] to have reactivity with component [A] and component [C] so that it is incorporated, through curing reaction, in the crosslink structure formed of component [A] and component [C], which serves to enable the formation of a stable uniform phase or a 400nm-or-less fine phase-separated structure. If components [A], [B], and [C] form an above 400nm phase-separated structure in the cured epoxy resin, the phase with a relatively small elastic modulus can act to reduce the compression strength of the fiber reinforced composite material and make it difficult to develop in-plane shear strength stably.

For the present invention, a phase-separated structure is one in which phases containing different resin constituents as primary components are distributed with a 0.01 $\mu$m or more structural period. As compared with this, a state in which components are mixed uniformly at the molecular level is referred to as a mutually compatible state and for the present invention, a state is considered to be mutually compatible if in the state, phases containing different resin constituents as primary components have a phase-separation structural period of less than 0.01 $\mu$m.

For the cured epoxy resin according to the present invention, the phase-separation structural period is defined as described below. Here, such a phase separated structure may be either a bicontinuous structure or a sea island structure, each of which is defined separately below. In the case of a bicontinuous structure, straight lines with a predetermined length are drawn on a microscopic photograph, and the intersections between the straight lines and the phase-to-phase interfaces are determined. Then, the distance between each pair of adjacent intersections is measured and the number average of the distance measurements is adopted as structural period. Such lines with a predetermined length are defined as follows on the basis of microscopic photographs. For a specimen with an assumed structural period of the order of 0.01 $\mu$m (0.01 $\mu$m or more and less than 0.1 $\mu$m), a photograph is taken at a magnification of 20,000 times and three 20 mm lines (1 $\mu$m length on the specimen) are selected randomly on the photograph, or similarly, for a specimen with an assumed phase-separation structural period of the order of 0.1 $\mu$m (0.1 $\mu$m or more and less than 1 $\mu$m), a photograph is taken at a magnification of 2,000 times and three 20 mm lines (10 $\mu$m length on the specimen) are selected randomly on the photograph. For a specimen with an assumed phase-separation structural period of the order of 1 $\mu$m (1 $\mu$m or more and less than 10 $\mu$m), a photograph is taken at a magnification of 200 times and three 20 mm lines (100 $\mu$m length on the specimen) are selected randomly on the photograph. If a measured phase-separation structural period is significantly out of the expected range, the relevant lengths are measured again at a magnification that suits the corresponding order and the measurements are adopted. In the case of a sea-island structure, the minimum distance between island phases is adopted even when the island regions have elliptic or irregular shapes, or others such as two- or more layered circles or ellipses.

For the cured epoxy resin according to the present invention, a sea-island type phase-separated structure consisting of an [A]-rich phase and a [B]-rich phase may be formed in the cured epoxy resin. Here, the diameter of the island phase means the size of the island phase regions in the sea-island structure and calculated as the number average value in predetermined areas. For an elliptical island phase region, its long diameter is adopted, while for an irregular shaped island phase region, the diameter of the circumscribed circle about it is adopted. In the case of a multilayered region of circular or elliptical shapes, the diameter of the circle or the long diameter of the ellipse of the outermost layer is to be used. For a sea-island structure, all the island phase regions in predetermined areas are examined to determine their long diameters and their number average is adopted as their phase separation size.

As described above, the phase-separation structural period and island phase diameter are determined on the basis of a microscopic photograph of predetermined areas. Such predetermined areas are selected as follows from a microscopic photograph. For a specimen with an assumed phase-separation structural period of the order of 0.01 $\mu$m (0.01 $\mu$m or more and less than 0.1 $\mu$m), a photograph was taken at a magnification of 20,000 times and three 4 mm $\times$ 4 mm square areas (0.2 $\mu$m $\times$ 0.2 $\mu$m square areas on the specimen) were selected randomly on the photograph. Similarly, for a specimen with an assumed phase-separation structural period of the order of 0.1 $\mu$m (0.1 $\mu$m or more and less than 1 $\mu$m), a photograph was taken at a magnification of 2,000 times and three 4 mm $\times$ 4 mm square areas (2 $\mu$m $\times$ 2 $\mu$m square areas on the specimen) were selected randomly on the photograph. Also similarly, for a specimen with an assumed phase-separation structural period of the order of 1 $\mu$m (1 $\mu$m or more and less than 10 $\mu$m), a photograph was taken at a magnification of 200 times and 4 mm $\times$ 4 mm square areas (20 $\mu$m $\times$ 20 $\mu$m square areas on the specimen) were selected randomly on the photograph. If the measured phase-separation structural period is significantly out of the expected size range, relevant areas are observed again at a magnification that suits the corresponding order and the measurements taken are adopted.

The structural period of this cured epoxy resin can be examined by observing the cross section of cured epoxy resin by scanning electron microscopy or transmission electron microscopy. If necessary, the specimen may be dyed with osmium. Dyeing can be carried out by a common method.

Other techniques for determination of phase structures in such a cured epoxy resin specimen include the use of a thermodynamic properties analysis method such as DMA and DSC to determine whether the specimen gives only one detected Tg peak or not. For example, the scatter diagram for the loss factor (tan$\delta$) and temperature obtained from DMA heating measurement of such cured epoxy resin is examined, and phase separation is assumed to exist if a tan$\delta$ peak attributable to component [B] appears in the region above room temperature in addition to a tan$\delta$ peak attributable to the crosslink structure formed of components [A] and [C].

The epoxy resin composition according to the present invention may contain a coupling agent, thermosetting resin particles, thermoplastic resin other than component [B], thermoplastic resin particles, elastomer, silica gel, carbon black, clay, carbon nanotube, metal powder, and other inorganic fillers, unless they impair the advantageous effects of the invention.

For the epoxy resin composition according to the present invention, it is preferable that the constituents other than curing agent [C] be first heated and kneaded uniformly at a temperature of about 150°C to 170°C and cooled to a temperature of about 80°C, followed by adding curing agent [C] and further kneading, although methods to be used to mix the constituents are not limited to this.

Different types of reinforcement fiber can serve for the present invention, and they include glass fiber, carbon fiber, graphite fiber, aramid fiber, boron fiber, alumina fiber, and silicon carbide fiber. Two or more of these types of reinforcement fiber may be used in combination, but the use of carbon fiber and graphite fiber is preferred to provide lightweight moldings with high durability. With a high specific modulus and specific strength, carbon fiber is used favorably, particularly when applied to the production of lightweight or high-strength material.

In respect to carbon fiber, which is used favorably for the present invention, virtually any appropriate type of carbon fiber can be adopted for varied uses, but carbon fiber to be adopted preferably has a tensile modulus of 400 GPa or less from the viewpoint of impact resistance. From the viewpoint of strength, carbon fiber with a tensile strength of 4.4 to 6.5 GPa is preferred because composite material with high rigidity and high mechanical strength can be produced. Tensile elongation is also an important factor, and it is preferable for the carbon fiber to have a high strength and a high elongation percentage of 1.7% to 2.3%. The most suitable carbon fiber will have various good characteristics simultaneously including a tensile modulus of at least 230 GPa, tensile strength of at least 4.4 GPa, and tensile elongation of at least 1.7%.

Commercial products of carbon fiber include TORAYCA (registered trademark) T800G-24K, TORAYCA (registered trademark) T800S-24K, TORAYCA (registered trademark) T700G-24K, TORAYCA (registered trademark) T300-3K, and Torayca (registered trademark) T700S-12K (all manufactured by Toray Industries, Inc.).

In regard to the form and way of alignment of carbon fibers, long fibers paralleled in one direction, woven fabric, or others may be adopted appropriately, but if carbon fiber reinforced composite material that is lightweight and relatively highly durable is to be obtained, it is preferable to use carbon fibers in the form of long fibers (fiber bundles) paralleled in one direction, woven fabric, or other continuous fibers.

The prepreg according to the present invention is produced by impregnating the aforementioned reinforcement fiber with the aforementioned epoxy resin composition. In the prepreg, the mass fraction of fiber is preferably 40 to 90 mass%, more preferably 50 to 80 mass%. If the mass fraction of fiber is too small, the resulting composite material will be too heavy and the advantages of fiber reinforced composite material, such as high specific strength and specific modulus, will be impaired in some cases, while if the mass fraction of fiber is too large, impregnation with the resin composition will not be achieved sufficiently and the resulting composite material will suffer from many voids, possibly leading to a large deterioration in mechanical characteristics.

There are no specific limitations on the shape of the reinforcement fiber, which may be, for example, in the form of long fibers paralleled in one direction, tow, woven fabric, mat, knit, or braid. For applications that require high specific strength and high specific modulus, in particular, the most suitable is a unidirectionally paralleled arrangement of reinforcement fiber, but cloth-like (woven fabric) arrangement is also suitable for the present invention because of easy handling.

The prepreg according to the present invention can be produced by some different methods including a method in which the epoxy resin composition used as matrix resin is dissolved in a solvent such as methyl ethyl ketone and methanol to produce a solution with a decreased viscosity, and then used to impregnate reinforcement fiber (wet method), and a hot melt method in which the matrix resin is heated to decrease its viscosity and then used to impregnate reinforcement fiber (dry method).

The wet method includes the steps of immersing reinforcement fiber in a solution of an epoxy resin composition, that is, matrix resin, pulling it out, and evaporating the solvent using an oven etc., whereas the hot melt method (dry method) includes the steps of heating an epoxy resin composition to reduce the viscosity and directly impregnating the reinforcement fiber with it, or the steps of coating release paper or the like with the epoxy resin composition to prepare a film, attaching the film to cover either or both sides of a reinforcement fiber sheet, and pressing them while heating so that the reinforcement fiber is impregnated with the resin. The hot melt method is preferred for the present invention because the resulting prepreg will be substantially free of residual solvent.

Plies of the resulting prepreg are stacked and the laminate obtained is heated under pressure to cure the matrix resin, thereby providing the fiber reinforced composite material according to the present invention.

Here, the application of heat and pressure is carried out by using an appropriate method such as press molding, autoclave molding, bagging molding, wrapping tape molding, and internal pressure molding.

The fiber reinforced composite material according to the present invention can be produced by a prepreg-free molding method in which reinforcement fiber is directly impregnated with the epoxy resin composition, followed by heating for curing, and examples of such a method include hand lay-up molding, filament winding, pultrusion, resin injection molding, and resin transfer molding. For these methods, it is preferable that the two liquid components, that is, a base resin formed of epoxy resin and a curing agent, are mixed immediately before use to prepare an epoxy resin composition.

Fiber reinforced composite material produced from the epoxy resin composition according to the present invention as matrix resin is used favorably for producing sports goods, aircraft members, and general industrial products. More specifically, their preferred applications in the aerospace industry include primary structural members of aircraft such as main wing, tail unit, and floor beam; secondary structural members such as flap, aileron, cowl, fairing, and other interior materials; and structural members of rocket motor cases and artificial satellites. Of these aerospace applications, primary structural members of aircraft, including body skin and main wing skin, that particularly require high impact resistance as well as high tensile strength at low temperatures to resist the coldness during high-altitude flights, represent particularly suitable applications of the fiber reinforced composite material according to the present invention. Furthermore, the aforementioned sports goods include golf shaft, fishing rod, rackets for tennis, badminton, squash, etc., hockey stick, and skiing pole. The aforementioned general industrial applications include structural members of vehicles such as automobile, ship, and railroad vehicle; and civil engineering and construction materials such as drive shaft, plate spring, windmill blade, pressure vessel, flywheel, roller for paper manufacture, roofing material, cable, reinforcing bar, and mending/reinforcing materials.

Examples

The epoxy resin composition according to the present invention is described more specifically below with reference to Examples. Described first below are the resin material preparation procedures and evaluation methods used in Examples.

<Epoxy resin [A]>

<Polyfunctional amine type epoxy resin>

• SUMI-EPOXY (registered trademark) ELM434 (tetraglycidyl diaminodiphenyl methane, manufactured by Sumitomo Chemical Co., Ltd.)
• jER (registered trademark) 630 (triglycidyl aminophenol, manufactured by Mitsubishi Chemical Corporation)
• Araldite (registered trademark) MY0600 (triglycidyl aminophenol, manufactured by Huntsman Advanced Materials)

<Bifunctional amine type epoxy resin>

• GAN (diglycidyl aniline, manufactured by Nippon Kayaku Co., Ltd.)
• GOT (diglycidyl toluidine, manufactured by Nippon Kayaku Co., Ltd.)

<Epoxy resins other than the above>

• jER (registered trademark) 828 (bisphenol A type epoxy resin, manufactured by Mitsubishi Chemical Corporation)
• EPICLON (registered trademark) 830 (bisphenol F type epoxy resin, manufactured by DIC)
• jER (registered trademark) 1004 (bisphenol F type epoxy resin, manufactured by Mitsubishi Chemical Corporation))
• EPICLON (registered trademark) HP7200H (epoxy resin containing dicyclopentadiene backbone, manufactured by DIC)

<Polyethersulfone>

<Polyethersulfone [B] with a weight-average molecular weight of 2,000 to 20,000 g/mol>

• Polyethersulfone ([B]) synthesized by the following procedure

(Method for production of [B]: based on Japanese Unexamined Patent Publication No. HEI-5-86186. A detailed procedure for the production is described in Reference example 1.)

Reference Example 1

In a 1 L flask equipped with a stirrer, thermometer, cooler, distillate separator, and nitrogen supply tube, 4,4'-dihydroxy diphenyl sulfone (hereinafter abbreviated as DHDPS) (50.06 g, 0.20 moles), toluene (100 ml), 1,3-dimethyl-2-imidazolidinone (250.8 g), and 40% potassium hydroxide aqueous solution (56.0 g, 0.39 moles) were weighed out and, while stirring, nitrogen gas was supplied to achieve nitrogen substitution of the entire reaction system. Heating was performed up to 130°C while supplying nitrogen gas. As the temperature of the reaction system rises, reflux of toluene was started to remove water from the reaction system through azeotropic distillation with toluene, and azeotropic dehydration was continued at 130°C for 4 hours while recovering toluene back to the reaction system. Subsequently, 4,4'-dichlorodiphenyl sulfone (hereinafter abbreviated as DCDPS) (57.40 g, 0.20 moles) was added to the reaction system together with 40 g of toluene, and the reaction system was heated to 150°C. The reaction was continued for 4 hours while distilling out toluene to provide a high-viscosity, dark brown solution. The temperature of the reaction liquid was lowered by cooling to room temperature, and the reaction solution was poured into 1 kg of methanol to precipitate polymer powder. The polymer powder was recovered by filtration and 1 kg of water was added, followed by further adding 1 N hydrochloric acid and adding a slurry solution to adjust the pH value to 3 to 4 to make the solution acidic. After recovering the polymer powder by filtration, the polymer powder was washed twice with 1 kg of water. It was further washed with 1 kg of methanol and vacuum-dried at 150°C for 12 hours. The polymer powder obtained was white powder and the yield weight was 88.3 g (yield rate 99.9% calculated from the following equation: yield rate = (92.8 / 464.53 (molecular weight of intermediate product for polyethersulfone component synthesis) / 0.2 × 100).

Then, in a 300 mL three-neck flask equipped with a stirrer, nitrogen supply tube, thermometer, and cooling pipe, DHDPS (1.25 g, 4.35 mmol), N-methyl-2-pyrolidone (NMP) 200 ml, and anhydrous potassium carbonate (0.6 g, 4.34 mmol) were weighed with the intermediate product for polyethersulfone component synthesis (5 g, 10.7 mmol (calculated as 5 / 464.53 × 1,000), and the reaction temperature was increased to 150°C while stirring the NMP reaction solution, followed by ending the reaction after a 1 hour reaction period, pouring the reaction solution into 500 ml of methanol, crushing the solid precipitate, washing it twice with 500 ml of water, and vacuum-drying it at 130°C. The polymer powder obtained was white powder, and the yield weight and yield rate were 7.2 g and 96%, respectively (yield rate was calculated as: weight of polyethersulfone, i.e. recovered polyethersulfone component / (feed weight of intermediate product for polyethersulfone component synthesis + feed weight of DHDPS) × 100).

Component [B] is substantially identical to the polyethersulfone described in Japanese Unexamined Patent Publication No. HEI-5-86186 except that the weight-average molecular weight of the polyethersulfone disclosed in Japanese Unexamined Patent Publication No. HEI-5-86186 is larger than that of component [B]. Thus, polyethersulfone samples, referred to as B-1 to B-4, which differ in weight-average molecular weight and end group conversion rate, were synthesized according to the procedure specified in the above reference example while varying the quantity of DHDPS, quantity of the alkali metal, and reaction time, and the samples were used in Examples. The weight-average molecular weight was measured using, as detector, an R-401 differential refractometer manufactured by WATERS and a 201 D type GPC-5 gel permeation chromatograph manufactured by WATERS. The measuring conditions included: the use of o-chlorophenol/chloroform (volume ratio 2/8) as eluant, column temperature of 23°C, and injection of 0.1 ml of a solution with a specimen concentration of 1 to 2 mg/ml. Two Shodex 80M columns manufactured by Showa Denko K.K. and one Shodex 802 column manufactured by Showa Denko K.K. were connected in series and an eluant was supplied at a rate of 1.0 ml/min. The molecular weight of the polymer was determined by conversion based on a calibration curve for standard polymethyl methacrylate.

In regard to the glass transition temperature Tg, a 10 mg specimen was taken from the material for component [B] synthesized above, and subjected to measurement at a heating rate of 10°C/min in the temperature range from 30°C to 350°C using a DSC2910 (model) apparatus manufactured by TA Instruments. The midpoint temperature determined according to JIS K7121-1987 was assumed to represent the glass transition temperature Tg and used for heat resistance evaluation.

- B-1 (polyethersulfone, weight-average molecular weight 4,000, hydroxyphenyl end group 100 mol%, Tg 204°C)
- B-2 (polyethersulfone, weight-average molecular weight 7,000, hydroxyphenyl end group 100 mol%, Tg 206°C)
- B-3 (polyethersulfone, weight-average molecular weight 14,000, hydroxyphenyl end group 94 mol%, Tg 211°C)
- B-4 (polyethersulfone, weight-average molecular weight 18,000, hydroxyphenyl end group 86 mol%, Tg 214°C)

<Polyethersulfone polymers other than the above>

- Virantage (registered trademark) VW-10700RP (polyethersulfone, manufactured by Solvay Advanced Polymers, weight-average molecular weight 21,000)
- Sumikaexcel (registered trademark) PES5003P (polyethersulfone, manufactured by Sumitomo Chemical Co., Ltd., weight-average molecular weight 47,000)
- D-1 (polyethersulfone, weight-average molecular weight 22,000, hydroxyphenyl end group 100 mol%, Tg 217°C)

(Method for production of [D-1]: based on Japanese Unexamined Patent Publication No. HEI-5-86186. It was synthesized according to the aforementioned production procedure for component [B] and subjected to evaluation.)

<Components other than constituents [A], [B], and [C]>

- Virantage (registered trademark) VW-30500RP (polysulfone, manufactured by Solvay Advanced Polymers, weight-average molecular weight: 14,000)
- Matsumoto Microsphere (registered trademark) M (polymethyl methacrylate, manufactured by Matsumoto Yushi-Seiyaku Co., Ltd., weight-average molecular weight 1,000,000)
- Particle 1 (thermoplastic resin particle prepared from Grilamide (registered trademark) TR55 used as feed)

  (Production method for particle 1: according to International Publication WO 2009/142231)

In a 100 ml four-neck flask, 2.5 g of amorphous polyamide (Grilamide (registered trademark) TR55 manufactured by Emser Werke, Inc., weight-average molecular weight 18,000) used as polymer A, 42.5 g of N-methyl-2-pyrolidone used as organic solvent, and 5 g of polyvinyl alcohol (Gohsenol (registered trademark) GL-05 manufactured by Nippon Synthetic Chemical Industry Co., Ltd.) used as polymer B were fed and heated at 80°C and stirred to ensure dissolution of the polymers. After lowering the temperature of the system back to room temperature, 50 g of ion-exchanged water, which was used as poor solvent, was dropped through a water supply pump at a rate of 0.41 g/min while stirring the solution at 450 rpm. The solution turned to white when the amount of ion-exchanged water added reached 12 g. After finishing the addition of the total quantity of water, stirring was continued for 30 min, and the resulting suspension liquid was filtered, followed by washing with 100 g of ion-exchanged water and vacuum-drying at 80°C for 10 hours to provide 2.2 g of a white solid material. The resulting powder was observed by scanning electron microscopy and found to be formed of fine particles of polyamide with an average particle diameter of 16.1 $\mu$m.

<Curing agent [C]>

- 3,3'-DAS (3,3'-diaminodiphenyl sulfone, manufactured by Mitsui Fine Chemical, Inc.)
- SEIKACURE-S (4,4'-diaminodiphenyl sulfone, manufactured by Wakayama Seika Kogyo Co., Ltd.)
- DICY-7 (dicyandiamide, manufactured by Mitsubishi Chemical Corporation)

<Curing accelerator>

- DCMU99 (3-(3,4-dichlorophenyl)-1,1-dimethylurea, curing accelerator, manufactured by Hodogaya Chemical Co., Ltd.)

(1) Preparation of epoxy resin composition

Predetermined amounts of epoxy resin, polyethersulfone, and other components were put in a kneader and heated to 160°C while kneading, followed by kneading at 160°C for 1 hour to provide a transparent viscous liquid. After cooling to 80°C while kneading, a predetermined amount of curing agent [C] was added, followed by further kneading to provide an epoxy resin composition.

(2) Viscosity of epoxy resin composition (G'/η*)

The viscosity of an epoxy resin composition was determined from the storage elastic modulus G' and complex viscosity η* at 80°C measured by simply heating a specimen at a heating rate of 1.5°C/min and taking measurements under the conditions of a frequency of 1 Hz and a gap of 1 mm using a dynamic viscoelasticity measuring apparatus (ARES, manufactured by TA Instruments) equipped with parallel plates with a diameter of 40 mm. From the value of storage elastic modulus G' at 80°C and the value of complex viscosity η* at 80°C, the ratio G'/η* between the storage elastic modulus G' at 80°C and the complex viscosity η* at 80°C was calculated.

(3) Bending elastic modulus of cured epoxy resin

The epoxy resin composition prepared in section (1) above was deaerated in a vacuum and injected in a mold which was set up so that the thickness would be 2 mm by means of a 2 mm thick Teflon (trademark) spacer. Curing was performed at a temperature of 180°C for 2 hours to provide cured epoxy resin with a thickness of 2 mm. Then, the resulting cured epoxy resin plate was cut to prepare a test piece with a width of 10 mm and length of 60 mm, and it was subjected to three-point bending test with a span of 32 mm, followed by calculation of the bending elastic modulus according to JIS K7171-1994.

(4) Nominal strain at compression fracture of cured epoxy resin

The epoxy resin composition prepared in section (1) above was deaerated in a vacuum and injected in a mold which was set up so that the thickness would be 6 mm by means of a 6 mm thick Teflon (trademark) spacer, followed by curing at a temperature of 180°C for 2 hours to provide a cured epoxy resin with a thickness of 6 mm. This cured epoxy resin was cut to prepare a test piece with a size of $6 \times 6$ mm. A plate of cured epoxy resin with a thickness of 6 mm was prepared using an Instron type universal tester (manufactured by Instron Corporation). Then, a cubic specimen 6 mm on each side was cut out of the cured epoxy resin plate and subjected to measurement of the nominal strain at compression fracture under the same conditions as specified in JIS K7181 except for a test speed of $1\pm0.2$ mm/min.

(5) Structural period of cured epoxy resin

The cured epoxy resin obtained above was dyed, sliced to produce a thin section, and examined by transmission electron microscopy (TEM) under the following conditions to provide a transmission electron microscopic image. As the dyeing agent, either $OsO_4$ or $RuO_4$ suitable for the resin composition was selected to ensure an adequate contrast to permit easy morphological examination.

- Equipment: H-7100 transmission electron microscope (manufactured by Hitachi, Ltd.)
- Accelerating voltage: 100 kV
- Magnification: 10,000

Under these conditions, the structural period of [A]-rich phase regions and [B]-rich phase regions was observed. Results on the phase structural period of cured epoxy resin are given in the column for phase structure size ($\mu$m) in Tables 1 to 3.

(6) Preparation of prepreg

An epoxy resin composition was spread over a piece of release paper with a knife coater to prepare a resin film. Then, carbon fibers of TORAYCA (registered trademark) T800G-24K-31 E manufactured by Toray Industries, Inc. were paralleled in one direction to form a sheet, and two resin films were used to cover both sides of the carbon fiber sheet and pressed under heat to impregnate the carbon fiber sheet with the resin to provide a unidirectional prepreg sheet with a carbon fiber metsuke of 190 g/m$^2$ and a matrix resin mass fraction of 35.5%. Here, in cases where an epoxy resin composition containing thermoplastic resin particles was used, two-step impregnation was carried out as described below to produce prepreg sheets in which the thermoplastic resin particles were highly localized near the surface.

First, primary prepreg that was free of thermoplastic resin particles was prepared. An epoxy resin composition was prepared by the procedure described in section (1) above using component materials listed in Tables 1 to 3 excluding thermoplastic resin particles insoluble in epoxy resin. This epoxy resin composition for primary prepreg was spread over a piece of release paper with a knife coater to provide a resin film for primary prepreg with a metsuke of 30 g/m$^2$, which corresponds to 60 mass% of the normal value. Then, carbon fibers of TORAYCA (registered trademark) T800G-24K-31 E manufactured by Toray Industries, Inc. were paralleled in one direction to form a sheet, and two of the resin films for primary prepreg were used to cover both sides of the carbon fiber sheet and pressed under heat using heating rollers at a temperature of 100°C and an air pressure of 1 atm to impregnate the carbon fiber sheet with the resin to provide primary prepreg.

To prepare resin films for two-step impregnation, the procedure described in section (1) above was carried out by using a kneader to produce an epoxy resin composition containing thermoplastic resin particles insoluble in epoxy resin, which is among the component materials listed in Tables 1 to 3, in a quantity 2.5 times the specified value. This epoxy resin composition for two-step impregnation was spread over a piece of release paper with a knife coater to provide a resin film for two-step impregnation with a metsuke of 20 g/m$^2$, which corresponds to 40 mass% of the normal value. Such films were used to cover both sides of a primary prepreg sheet and pressed under heat using heating rollers at a temperature of 80°C and an air pressure of 1 atm to provide prepreg in which thermoplastic resin particles were extremely localized near the surface.

(7) In-plane shear strength of fiber reinforced composite material

A required number of unidirectional prepreg sheets were stacked in a lamination structure of [+45/-45]$_{5S}$ with a fiber direction of $\pm 45°$ so as to form a molded product with a thickness of 2 mm, and cured by heating at a temperature of 180°C under a pressure of 6 kg/cm$^2$ for 2 hours in an autoclave to provide unidirectional composite material. Then, the resulting material was examined according to JIS K7079 (1991) to determine the in-plane shear strength. Measurements were taken from five samples (n = 5) and their average was adopted.

(Example 1)

In a kneading machine, 50 parts by mass of SUMI-EPOXY (registered trademark) ELM434 (polyfunctional amine type epoxy resin), 50 parts by mass of GAN (bifunctional amine type epoxy resin), and 180 parts by mass of B-1 (polyethersulfone [B] with a weight-average molecular weight of 2,000 to 20,000 g/mol) were kneaded, followed by further kneading with 50 parts by mass of 3,3'-DAS added as curing agent [C] to prepare an epoxy resin composition. Table 1 lists the components and proportions (figures in Table 1 are in parts by mass). The resulting epoxy resin composition was examined to determine the viscosity of the epoxy resin composition ('G'/η*) (section (2)), bending elastic modulus of cured epoxy resin (section (3)), nominal strain at compression fracture of cured epoxy resin (section (4)), structural period of cured epoxy resin (section (5)), and in-plane shear strength of fiber reinforced composite material (section (7)). Results are given in Table 1.

(Examples 2-10)

Except that the epoxy resin, polyethersulfone, other components, curing agent, and their quantities were as specified in Tables 1 and 2, the same procedure as in Example 1 was carried out to produce an epoxy resin composition. The resulting epoxy resin composition was examined to determine the viscosity of the epoxy resin composition ('G'/n*) (section (2)), bending elastic modulus of cured epoxy resin (section (3)), nominal strain at compression fracture of cured epoxy resin (section (4)), structural period of cured epoxy resin (section (5)), and in-plane shear strength of fiber reinforced composite material (section (7)). Results are given in Table 1 and Table 2.

[Table 1]

[Table 1]

|  | Example 1 | Example 2 | Example 3 | Example 4 | Example 5 | Example 6 | Example 7 |
|---|---|---|---|---|---|---|---|
| epoxy resin [A] |  |  |  |  |  |  |  |

(continued)

| | Example 1 | Example 2 | Example 3 | Example 4 | Example 5 | Example 6 | Example 7 |
|---|---|---|---|---|---|---|---|
| (polyfunctional amine type epoxy resin) | | | | | | | |
| • SUMI-EPOXY®ELM434 | 50 | 60 | | | | | 70 |
| • jER®630 | | | 40 | | 10 | 80 | |
| • Araldite®MY0600 | | | | 30 | | | |
| (bifunctional amine type epoxy resin) | | | | | | | |
| • GAN | 50 | 30 | 40 | 60 | 90 | | 10 |
| • GOT | | | 5 | | | 10 | |
| (epoxy resin other than above) | | | | | | | |
| • jER® 828 | | | 15 | | | 10 | 20 |
| • EPICLON® 830 | | 10 | | | | | |
| • jER® 1004 | | | | | | | |
| • EPICLON® HP7200H | | | | 10 | | | |
| polyethersulfone [B] | | | | | | | |
| (polyethersulfone with weight-average molecular weight of 2,000 to 20,000 g/mol) | | | | | | | |
| • B-1 | 180 | | | | 230 | | |
| • B-2 | | 125 | | | | 100 | |
| • B-3 | | | 80 | | | | 60 |
| • B-4 | | | | 38 | | | |
| (polyethersulfone other than above) | | | | | | | |
| • Virantage® VW-10700RP | | | | | | | |
| • SUMI-EPOXYI® PES5003P | | | | | | | |
| • D-1 | | | | | | | |
| other component | | | | | | | |
| • Virantage® VW-30500RP | | | | | | | |
| • Matsumoto Microsphere® M | | | | | | | |
| • particles 1 | | | | | | | 30 |
| curing agent [C] | | | | | | | |
| • 3,3'-DAS | 50 | | 50 | | | 50 | |
| • SEIKACURE- S | | 50 | | 50 | 55 | | 50 |

(continued)

|  | Example 1 | Example 2 | Example 3 | Example 4 | Example 5 | Example 6 | Example 7 |
|---|---|---|---|---|---|---|---|
| • DICY-7 | | | | | | | |
| curing accelerator | | | | | | | |
| • DCMU99 | | | | | | | |
| resin composition characteristics | | | | | | | |
| • 80°C G'/η* | 0.23 | 0.31 | 0.28 | 0.20 | 0.22 | 0.25 | 0.24 |
| cured resin characteristics | | | | | | | |
| • bending elastic modulus (GPa) | 4.3 | 4.3 | 4.1 | 4.2 | 4.0 | 4.1 | 4.2 |
| • nominal strain at compression fracture (%) | 61 | 62 | 55 | 52 | 60 | 58 | 55 |
| • phase structure size (μm) | uniform | uniform | uniform | uniform | uniform | uniform | uniform |
| fiber reinforced composite material characteristics | | | | | | | |
| • in-plane shear strength (MPa) | 146 | 148 | 140 | 131 | 146 | 142 | 137 |

[Table 2]

[Table 2]

|  | Example 8 | Example 9 | Example 10 |
|---|---|---|---|
| epoxy resin [A] | | | |
| (polyfunctional amine type epoxy resin) | | | |
| • SUMI-EPOXY ® ELM434 | 60 | 40 | 50 |
| • jER® 630 | | | 50 |
| • Araldite® MY0600 | | | |
| (bifunctional amine type epoxy resin) | | | |
| • GAN | 30 | 40 | |
| • GOT | | | |
| (epoxy resin other than above) | | | |
| • jER® 828 | | 20 | |
| • Epicron® 830 | 10 | | |
| • jER® 1004 | | | |
| • Epicron® HP7200H | | | |
| polyethersulfone [B] | | | |
| (polyethersulfone with weight-average molecular weight of 2,000 to 20,000 g/mol) | | | |
| • B-1 | | | |
| • B-2 | 50 | | 30 |

(continued)

|  | Example 8 | Example 9 | Example 10 |
|---|---|---|---|
| • B-3 |  | 65 |  |
| • B-4 |  |  |  |
| (polyethersulfone other than above) |  |  |  |
| • Virantage®VW-10700RP |  |  |  |
| • SUMIKAEXCEL® PES5003P |  |  |  |
| • D-1 |  |  |  |
| other component |  |  |  |
| • Virantage®VW-30500RP |  |  |  |
| • Matsumoto Microsphere® M |  |  |  |
| • particles 1 |  |  |  |
| curing agent [C] |  |  |  |
| • 3,3'-DAS |  |  |  |
| • SEIKACURE- S | 50 | 50 | 35 |
| • DICY-7 |  |  |  |
| curing accelerator |  |  |  |
| • DCMU99 |  |  |  |
| resin composition characteristics |  |  |  |
| • 80°C G'/$\eta$* | 0.22 | 0.24 | 0.20 |
| cured resin characteristics |  |  |  |
| • bending elastic modulus (GPa) | 4.3 | 4.1 | 4.0 |
| • nominal strain at compression fracture (%) | 50 | 53 | 51 |
| • phase structure size ($\mu$m) | uniform | 0.35 | uniform |
| fiber reinforced composite material characteristics |  |  |  |
| • in-plane shear strength (MPa) | 128 | 135 | 130 |

The cured epoxy resin samples obtained in Examples 1 to 10 had either a non-phase-separated uniform structure or a 400nm-or-less phase-separated structure and they all had good mechanical characteristics. Each of the resulting epoxy resin compositions had a dynamic viscoelasticity in a specific range, resulting in high moldability in fiber reinforced composite material production. It was also found that all fiber reinforced composite material samples obtained had sufficiently high in-plane shear strength.

(Comparative example 1)

Except for using polyethersulfone not meeting the requirements for component [B], the same procedure as in Example 3 was carried out to provide an epoxy resin composition. The resulting epoxy resin composition was examined to determine the viscosity of the epoxy resin composition (G'/$\eta$*) (section (2)), bending elastic modulus of cured epoxy resin (section (3)), nominal strain at compression fracture of cured epoxy resin (section (4)), structural period of cured epoxy resin (section (5)), and in-plane shear strength of fiber reinforced composite material (section (7)). As seen from the results given in Table 3, the resulting epoxy resin composition were too high in viscosity and failed to form cured epoxy resin.

(Comparative example 2)

Except for using polyethersulfone not meeting the requirements for component [B], the same procedure as in Example 4 was carried out to provide an epoxy resin composition and fiber reinforced composite material. The resulting epoxy resin composition was examined to determine the viscosity of the epoxy resin composition (G'/η*) (section (2)), bending elastic modulus of cured epoxy resin (section (3)), nominal strain at compression fracture of cured epoxy resin (section (4)), structural period of cured epoxy resin (section (5)), and in-plane shear strength of fiber reinforced composite material (section (7)). As seen from the results given in Table 3, the resulting resin composition was considerably low in G'/η*, resulting in deteriorated moldability in fiber reinforced composite material production. The resulting cured epoxy resin had a slightly large phase-separation structural period and accordingly, it was impossible to obtain a stable nominal strain at compression fracture, resulting in fiber reinforced composite material with insufficient in-plane shear strength.

Comparison between Example 3 and Comparative example 1 and comparison between Example 4 and Comparative example 2 show that the use of polyethersulfone alone is not sufficiently helpful to solve the problem, but the addition of polyethersulfone [B] with a weight-average molecular weight in a specific range is required to realize the intended effect.

(Comparative examples 3 to 7)

Except that the epoxy resin, polyethersulfone, other components, curing agent, and their quantities were as specified in Table 3, the same procedure as in Example 1 was carried out to produce an epoxy resin composition. The resulting epoxy resin composition was examined to determine the viscosity of the epoxy resin composition (G'/η*) (section (2)), bending elastic modulus of cured epoxy resin (section (3)), nominal strain at compression fracture of cured epoxy resin (section (4)), structural period of cured epoxy resin (section (5)), and in-plane shear strength of fiber reinforced composite material (section (7)).

As seen from the results given in Table 3, the use of polyethersulfone not meeting the requirements for component [B] in Comparative examples 3 and 4 results in cured epoxy resin with characteristics in deteriorated balance. In particular, the cured epoxy resin had an insufficient nominal strain at compression fracture, resulting in fiber reinforced composite material with insufficient in-plane shear strength.

As seen from the results given in Table 3, the use of a polymethyl methacrylate component with a large weight-average molecular weight instead of component [B] in Comparative example 5 led to an epoxy resin composition with a dynamic viscoelasticity out of the specific range, resulting in deterioration in the capability to impregnate reinforcement fiber. In addition, the resulting fiber reinforced composite material had insufficient in-plane shear strength.

Comparative example 6 adopts substantially the same resin components as in Example 7 of Patent document 2 (Japanese Unexamined Patent Publication No. SHO-61-228016). As seen from the results given in Table 3, the use of polysulfone instead of component [B] in Comparative example 6 resulted in cured epoxy resin with a largely decreased heat resistance. In addition, the resin composition obtained had a low G'/η* ratio, leading to deterioration in moldability in production of fiber reinforced composite material. Furthermore, the cured epoxy resin had a slightly large phase-separation structural period and the fiber reinforced composite material had insufficient in-plane shear strength.

Comparative example 7 adopts substantially the same resin components as in Example 6 of Patent document 1 (Japanese Unexamined Patent Publication No. 2009-167333). As seen from the results given in Table 3, the use of a polyethersulfone component that differs in molecular weight instead of component [B] in Comparative example 7 leads to cured epoxy resin with deteriorated mechanical characteristics. In addition, the resin composition obtained had a low G'/η* ratio, leading to deterioration in moldability in production of fiber reinforced composite material.

[Table 3]

[Table 3]

| | Comparative example 1 | Comparative example 2 | Comparative example 3 | Comparative example 4 | Comparative example 5 | Comparative example 6 | Comparative example 7 |
|---|---|---|---|---|---|---|---|
| epoxy resin [A] | | | | | | | |
| (polyfunctional amine type epoxy resin) | | | | | | | |
| • SUMI-EPOXY® ELM434 | | | | | | | 50 |
| • jER® 630 | 40 | | | | | | 50 |
| • Araldite® MY0600 | | 30 | 40 | 90 | | 100 | |
| (bifunctional amine type epoxy resin) | | | | | | | |
| • GAN | 40 | 60 | | | | | |
| • GOT | 5 | | | 10 | | | |
| (epoxy resin other than above) | | | | | | | |
| • jER® 828 | 15 | | | | 50 | | |
| • Epicron® 830 | | | 60 | | | | |
| • jER® 1004 | | | | | 50 | | |
| • Epicron® HP7200H | | 10 | | | | | |
| polyethersulfone [B] | | | | | | | |
| (polyethersulfone with weight-average molecular weight of 2,000 to 20,000 g/mol) | | | | | | | |
| • B-1 | | | | | | | |
| • B-2 | | | | | | | |
| • B-3 | | | | | | | |
| • B-4 | | | | | | | |
| (polyethersulfone other than above) | | | | | | | |

(continued)

| | Comparative example 1 | Comparative example 2 | Comparative example 3 | Comparative example 4 | Comparative example 5 | Comparative example 6 | Comparative example 7 |
|---|---|---|---|---|---|---|---|
| • Virantage® VW-10700RP | | | 65 | 40 | | | |
| • Sumikaexcel® PES5003P | 80 | 38 | | | | | |
| • D-1 | | | | | | | 30 |
| other component | | | | | | | |
| • Virantage® VW-30500RP | | | | | | 100 | |
| • Matsumoto Microsphere® M | | | | | 5 | | |
| • particles 1 | | | | | | | |
| curing agent [C] | | | | | | | |
| • 3,3'-DAS | 50 | | | | | 60 | |
| • SEIKACURE- S | | 50 | 60 | 75 | | | 35 |
| • DICY-7 | | | | | 4 | | |
| curing accelerator | | | | | | | |
| • DCMU99 | | | | | 2 | | |
| resin composition characteristics | | | | | | | |
| • 80°C G'/η* | 0.10 | 0.062 | 0.13 | 0.080 | 2.1 | 0.18 | 0.14 |
| cured resin characteristics | | | | | | | |
| • bending elastic modulus (GPa) | - | 4.0 | 3.5 | 4.0 | 3.0 | 3.9 | 3.8 |
| • nominal strain at compression fracture (%) | - | 50 | 48 | 45 | 60 | 55 | 47 |
| • phase structure size (μm) | - | 3 | uniform | uniform | uniform | 5 | uniform |
| fiber reinforced composite material characteristics | - | | | | | | |

EP 3 263 647 A1

(continued)

| | Comparative example 1 | Comparative example 2 | Comparative example 3 | Comparative example 4 | Comparative example 5 | Comparative example 6 | Comparative example 7 |
|---|---|---|---|---|---|---|---|
| • in-plane shear strength (MPa) | - | 119 | 118 | 114 | 145 | 126 | 116 |

Industrial Applicability

The present invention provides an epoxy resin composition that can efficiently impregnate reinforcement fiber, enables an appropriate resin flow during molding, and serves to produce fiber reinforced composite material with high in-plane shear strength, and also provide cured epoxy resin material, prepreg, and fiber reinforced composite material that in particular can serve favorably for production of structural members. Preferred applications in the aerospace industry include, for instance, primary structural members of aircraft such as main wing, tail unit, and floor beam; secondary structural members such as flap, aileron, cowl, fairing, and other interior materials; and structural members of rocket motor cases and artificial satellites. Preferred applications in general industries include structural members of vehicles such as automobile, ship, and railroad vehicle; and civil engineering and construction materials such as drive shaft, plate spring, windmill blade, various turbines, pressure vessel, flywheel, roller for paper manufacture, roofing material, cable, reinforcing bar, and mending/reinforcing materials. Preferred applications in the sporting goods industry include golf shafts, fishing rods, rackets for tennis, badminton, squash, etc., hockey sticks, and skiing poles.

**Claims**

1.   An epoxy resin composition comprising at least components [A], [B], and [C] listed below:

   [A] epoxy resin,
   [B] polyethersulfone having a weight-average molecular weight of 2,000 to 20,000 g/mol, and
   [C] curing agent.

2.   An epoxy resin composition as set forth in claim 1, wherein the storage elastic modulus G' and complex viscosity $\eta^*$ at 80°C meets the relation $0.20 \leqq G'/\eta^* \leqq 2.0$.

3.   An epoxy resin composition as set forth in either claim 1 or 2, wherein component [B] accounts for 20 to 60 mass% of the epoxy resin composition.

4.   An epoxy resin composition as set forth in any one of claims 1 to 3, wherein the hydroxyphenyl group accounts for 60 mol% or more of the end groups in component [B].

5.   An epoxy resin composition as set forth in any one of claims 1 to 4, wherein component [A] contains polyfunctional amine type epoxy resin.

6.   An epoxy resin composition as set forth in any one of claims 1 to 5, wherein component [A] contains bifunctional amine type epoxy resin.

7.   Cured epoxy resin produced by curing an epoxy resin composition as set forth in any one of claims 1 to 6 and **characterized by** having either a 400nm-or-less phase-separation structure or a uniform phase structure.

8.   Prepreg produced by impregnating reinforcement fiber with an epoxy resin composition as set forth in any one of claims 1 to 6.

9.   Prepreg as set forth in claim 8, wherein the reinforcement fiber is carbon fiber.

10.   Fiber reinforced composite material comprising either cured epoxy resin formed by curing an epoxy resin composition as set forth in any one of claims 1 to 6 or cured epoxy resin as set forth in claim 7, and reinforcement fiber.

## INTERNATIONAL SEARCH REPORT

| International application No. |
| --- |
| PCT/JP2015/082515 |

**A. CLASSIFICATION OF SUBJECT MATTER**
*C08L81/06*(2006.01)i, *C08J5/04*(2006.01)i, *C08L63/00*(2006.01)i

According to International Patent Classification (IPC) or to both national classification and IPC

**B. FIELDS SEARCHED**

Minimum documentation searched (classification system followed by classification symbols)
C08L81/06, C08J5/04, C08L63/00

Documentation searched other than minimum documentation to the extent that such documents are included in the fields searched
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2014/050896 A1 (Toho Tenax Co., Ltd.),<br>03 April 2014 (03.04.2014),<br>paragraphs [0049] to [0098]; examples<br>& US 2015/0274911 A1<br>paragraphs [0061] to [0110]; examples<br>& EP 2902435 A1 | 1-3,5,7-10<br>4,6 |
| X<br>A | JP 2015-501853 A (Cytec Technology Corp.),<br>19 January 2015 (19.01.2015),<br>claims; paragraph [0015]; examples<br>& WO 2013/070415 A1<br>claims; paragraph [0015]; examples<br>& US 2013/0115442 A1 & EP 2776487 A1<br>& TW 201323556 A & CN 103797043 A<br>& KR 10-2014-0100463 A | 1,2,5,7<br>3,4,6,8-10 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 December 2015 (07.12.15) | 15 December 2015 (15.12.15) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**INTERNATIONAL SEARCH REPORT**

International application No.

PCT/JP2015/082515

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2009-215481 A  (Toray Industries,  Inc.),<br>24 September 2009 (24.09.2009),<br>claims<br>(Family: none) | 6<br>1-5,7-10 |
| Y<br>A | JP 2009-167333 A  (Toray Industries,  Inc.),<br>30 July 2009 (30.07.2009),<br>paragraphs [0012], [0015]<br>(Family: none) | 4<br>1-3,5-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009167333 A
- JP SHO61228016 B
- WO 2012051045 A
- JP SHO427799 B
- JP SHO4521318 B
- JP SHO4819700 B
- JP HEI586186 B
- WO 2009142231 A